# EUROPÄISCHE PATENTSCHRIFT

(11) **EP 3 512 726 B1**
(45) Veröffentlichungstag und Bekanntmachung des Hinweises auf die Patenterteilung: **17.11.2021**
(21) Anmeldenummer: 17780631.2
(22) Anmeldetag: 15.09.2017
(51) Int. Cl.: B60J 5/06

(54) **SPANNEINRICHTUNG UND LADUNGSSICHERUNGSSYSTEM**
TENSIONING DEVICE AND LOAD SECURING SYSTEM
DISPOSITIF DE TENSION ET SYSTÈME DE FIXATION DE CHARGEMENT

(30) Priorität: 16.09.2016 DE 202016105188 U
(43) Veröffentlichungstag der Anmeldung: 24.07.2019
(73) Patentinhaber: Fahrzeugbau Karl Tang GmbH, 40721 Hilden (DE)
(72) Erfinder: BÖCKMANN, Udo, 42653 Solingen (DE)
(74) Vertreter: Schneiders & Behrendt Bochum
(86) Internationale Anmeldenummer: PCT/EP2017/073296
(87) Internationale Veröffentlichungsnummer: WO 2018/050829

(56) Entgegenhaltungen:
- DE-A1- 10 341 899
- DE-U1-202013 005 256
- US-A- 2 465 621
- US-A- 4 657 062
- US-A1- 2005 133 769
- US-A1- 2006 101 687

## Beschreibung

Die Erfindung betrifft eine Spanneinrichtung zum Verspannen einer Abdeckplane an einer seitlichen Begrenzung einer Ladefläche eines Fahrzeugs, mit wenigstens einem Spannelement zum Erzeugen einer Spannung in der Abdeckplane, wobei das Spannelement dazu ausgebildet ist, auf die Abdeckplane eine Zugkraft derart auszuüben, dass die Abdeckplane flächig verspannt wird, sowie ein Ladungssicherungssystem mit einer solchen Spanneinrichtung.

Solche Spanneinrichtungen sind aus DE 20 2013 005256 U1, US 2006/101687 A1, US 4 657 062 A und US 2 465 621 A bekannt.

Beim Transport von Ladungen auf den verschiedensten Verkehrswegen müssen die Ladungen vor Witterungseinflüssen, wie beispielsweise Wind und Regen, geschützt werden. Dies geschieht insbesondere durch die Verwendung von Abdeckungen, wie Planen. Die Abdeckungen bestehen üblicherweise aus einem belastbaren und strapazierfähigen Material. Sie müssen robust sein, eine lange Lebensdauer aufweisen und dazu geeignet sein, die Ladung vor äußeren Einflüssen zu schützen. Neben der Wetterschutzfunktion kommt den Abdeckungen aber auch noch häufig eine Ladungssicherungsfunktion zu. Die Abdeckungen bestehen daher aus einem relativ schweren und steifen Material und lassen sich daher sehr schwer bewegen, verstauen und falten. Eine derartige Ausgestaltung der Abdeckung ist notwendig, da sie gegenüber hohen Fahrtwinden und damit einhergehenden Schlagen oder Flattern beständig sein muss und zudem auch großen Zugspannungen standhalten muss.

Als eine technische Lösung haben sich speziell für Lastkraftwagen oder Anhänger so genannte Curtain-Sider verbreitet, bei welchen eine Plane über einem auf der Ladefläche angeordneten Rahmen verspannt wird. Die Ladefläche ist meist von einem Dach überdeckt, und die Seiten und gegebenenfalls auch das Heck werden von einer Plane oder mehreren einzelnen Planen abgedeckt. Die Plane kann oft wie ein Vorhang seitlich verschoben werden, muss aber für den Transport fixiert und gesichert werden. Dazu ist es erforderlich, die Plane gleichförmig und mit einer bestimmten Spannung an dem Rahmen bzw. der Ladefläche selbst zu verzurren. Hierbei werden häufig so genannte Übertotpunktspanner eingesetzt, mittels derer innerhalb der Plane verlaufende Spanngurte jeweils einzeln auf eine bestimmte Zugspannung gebracht werden können. Meist sind diese Gurte innerhalb der Plane angeordnet und mit der Plane verschweißt, wenn dies das Material der Plane zulässt. Bei Curtain-Sidern kann es vorkommen, dass sich einzelne Gurte lösen oder aufgrund der Vielzahl an Gurten ein Verspannen einiger Gurte unterbleibt. Ein weiterer Nachteil ist, dass die Übertotpunktspanner seitlich über den Rahmen der Ladefläche überstehen und beim Rangieren abgefahren werden können. Eine Seite einer Ladefläche komplett freizulegen ist zudem zeitlich sehr aufwendig, da hierzu eine Vielzahl an Spannern gelöst werden muss. Bei der Fixierung der Plane ist es aufwendig, jeden einzelnen Gurt mit dem entsprechenden Spanner bzw. der Ladefläche zu verbinden.

Falls die Übertotpunktspanner nicht zum Einsatz kommen sollen, bietet sich wahlweise ein Verspannen mittels einer Einrichtung an, an welche jeder einzelne der Gurte gekoppelt wird, um dann durch eine Bewegung der Einrichtung ein gemeinsames simultanes Verzurren aller Gurte zu ermöglichen. Hierbei kann ein Verbinden jedes einzelnen Gurtes mit der Einrichtung zum Beispiel dadurch erfolgen, dass an den Gurten jeweils Ösen, Schlaufen oder Augen vorgesehen sind, welche in Haken oder Klemmen oder dergleichen Beschläge eingehakt werden. Die entsprechenden Haken können dann zum Beispiel an einer drehbaren Welle angebracht sein, die entlang des bodenseitigen Ladeflächenrahmens drehbar gelagert ist. Durch Verdrehen der Welle kann die Plane verspannt werden. Aus der EP 0 753 422 A1 ist eine derartige Spanneinrichtung bekannt. Allerdings ist aufgrund der Vielzahl von Spannern die Fixierung und das Lösen der Abdeckplane zeitaufwendig und die Anordnung der Spannelemente macht eine Fixierung der Abdeckplane kompliziert.

Aufgabe der Erfindung ist es daher, eine Vorrichtung anzugeben, welche die beschriebenen Nachteile behebt eine einfache und schnelle flächige Verspannung der Abdeckplane ermöglicht.

Gelöst wird diese Aufgabe durch eine Spannvorrichtung mit den Merkmalen des Anspruchs 1, ein Ladungssicherungssystem mit den Merkmalen des Anspruchs 10 und eine Koppelungsanordnung mit den Merkmalen des Anspruchs 12.

Dadurch dass die Spanneinrichtung mit wenigstens einem Fixierelement im Bereich der seitlichen Begrenzung der Ladefläche unverlierbar fixierbar ist und wenigstens ein freies Kopplungselement zur Verbindung mit der Abdeckplane ausgebildet ist, wobei das Kopplungselement an wenigstens einem Verbindungspunkt über ein Verbindungselement mit dem Spannelement verbunden ist, wobei der Verbindungspunkt durch das Spannelement in seiner Lage gegenüber dem Fixierelement veränderlich ist, so dass durch Veränderung der Lage des Verbindungspunkts eine Verspannung der ankoppelbaren Abdeckplane erfolgt, kann eine einfach zu handhabende Vorrichtung bereitgestellt werden, bei der eine flächige gleichförmige Verspannung der Abdeckplane gewährleistet ist und bei der eine einfache Ankopplung der Abdeckplane möglich ist. Insbesondere ermöglicht das freie Kopplungselement eine einfache und sichere Verbindung zwischen der ankoppelbaren Abdeckplane und der Spanneinrichtung.

Die erfindungsgemäße Spanneinrichtung ist dazu vorgesehen, eine Abdeckplane, beispielsweise eine Lastkraftwagen-Plane zum Abdecken einer Ladefläche, mittels eines Spannelements zu verspannen, durch Erzeugen einer Spannung in der Abdeckplane, wobei das Spannelement dazu ausgebildet ist, auf die Abdeckplane eine Zugkraft auszuüben. Hierfür kann die Außenkontur des Spannelementes verändert werden. Die Abdeckplane wird zunächst lose gekoppelt. Die Veränderung der Außenkontur bewirkt dann die Erzeugung einer Zugspannung innerhalb der Abdeckplane. Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass das Verbindungselement flexibel ausgebildet und an die Kontur des Spannelements anpassbar ist. Diese flexible Ausgestaltung des Verbindungselementes ermöglicht eine besonders gute flächige Verspannung der ankoppelbaren Abdeckplane, da sich das Verbindungselement an die Kontur des Spannelements anpasst. Das Material des Verbindungselementes kann dem der Abdeckplane entsprechen. Bevorzugt ist das Verbindungselement unelastisch, also nicht oder nur wenig dehnbar. Eine Dehnbarkeit des Verbindungselementes ist aber keineswegs ausgeschlossen. So kann das Material des Verbindungselementes etwas dehnbarer als die Abdeckplane sein, wodurch eine aufgebrachte Zugspannung besonders gleichmäßig auf der Abdeckplane verteilt wird.

Erfindungsgemäß ist vorgesehen, dass das Verbindungelement das Spannelement zumindest teilweise manschettenförmig umgibt. Hierdurch kann das Spannelement durch das Verbindungselement geschützt werden, was die Vorrichtung fehlertoleranter macht.

Eine bevorzugte Ausführung sieht vor, dass das Verbindungselement als sich zumindest annährend parallel zur seitlichen Begrenzung erstreckender Abschnitt, vorzugsweise aus Planen- oder Textilmaterial, ausgebildet ist. Gerade ein solcher Abschnitt ermöglicht eine besonders gleichmäßige, flächige Verspannung der Abdeckplane.

Besonders vorteilhaft ist die Weiterbildung, dass das Kopplungselement als sich zumindest annährend parallel zur seitlichen Begrenzung erstreckende Schiene ausgebildet ist, mit nutförmigen Aufnahmen zur Aufnahme von wenigstens einem Kopplungsverbindungselement der Abdeckplane. Eine solche Schiene verringert den Aufwand bei der Kopplung der Abdeckplane mit der Spanneinrichtung. Mit der Verwendung einer Schiene können die Handgriffe bei der Verspannung einer Abdeckplane deutlich reduziert werden. Die Zeit für das Be- und Entladen von Gütern kann hierdurch deutlich verringert werden. Die Verwendung einer entsprechenden Schiene ermöglicht zudem eine gleichförmige Verteilung der Zugkraft, wodurch eine Faltenbildung und ein Flattern der Abdeckplane vermieden werden kann. Die Schiene besteht idealerweise aus einem strapazierfähigen, witterungsbeständigen und/oder formbeständigen Material, bevorzugt einem metallischen Werkstoff. Als idealer Werkstoff hat sich insbesondere Aluminium und Edelstahl herausgestellt, da hierdurch das Gewicht des Lastkraftwagen insgesamt in einem vertretbaren Rahmen gehalten werden kann.

Weiter vorteilhaft ist die Ausgestaltung, dass an dem Kopplungselement wenigstens ein Reflektor angebracht ist. Ein solcher Reflektor erhöht die Sicherheit im Straßenverkehr deutlich.

Eine vorteilhafte Ausführungsform der Erfindung sieht vor, dass das Kopplungselement eine im Wesentlichen plane Außenseite aufweist, die im gekoppelten Zustand nach außen, weg von der Fahrzeugmitte zeigt. Eine solche Ausgestaltung wirkt sich insbesondere positiv auf den Kraftstoffverbrauch und den CO₂-Ausstoß aus, da die gebräuchlichen Übertotpunktspanner entfallen können und hierdurch eine verbesserte Aerodynamik im Fahrtwind gegeben ist. Durch die plane Außenseite wird zudem eine Verletzungsgefahr, beispielsweise durch ein Hängenbleiben, minimiert.

Eine vorteilhafte Ausgestaltung sieht vor, dass der Reflektor an der planen Außenseite angebracht ist. Hierdurch ist eine besonders hohe Sichtbarkeit des Reflektors gegeben. Außerdem lässt sich der Reflektor auf der planen Außenseite besonders einfach anbringen.

Erfindungsgemäß ist vorgesehen, dass das Spannelement reversibel expandierbar ausgebildet ist. Hierdurch ist eine besonders einfache flächige Verspannung der Abdeckplane möglich. Die Abdeckplane wird hierzu zunächst mit der Spanneinrichtung an dem Kopplungselement gekoppelt. Die reversible Expandierung des Spannelements erzeugt dann eine besonders gleichmäßige Zugspannung innerhalb der gekoppelten Abdeckplane. Das expandierbare Spannelement erstreckt sich bevorzugt im Wesentlichen entlang der gesamten Ausdehnung der Spanneinrichtung. Hierdurch kann eine besonders gleichmäßige Zugkraft auf die Abdeckplane erreicht werden, wodurch die Abdeckplane über ihre gesamte Ausdehnung gleichförmig verspannt werden kann. Faltenbildung und flatternde Abdeckplanen die sich negativ auf die Aerodynamik des Lastkraftwagens bzw. des Anhängers auswirken und somit zu einem erhöhten Spritverbrauch führen, werden so vermieden. Das reversibel expandierbare Spannelement kann als Schlauch ausgebildet sein, welcher sich dabei idealerweise über die gesamte Ausdehnung der Spanneinrichtung erstreckt. Denkbar ist aber auch, dass es sich bei dem expandierbaren Spannelement um ein Kissen oder eine Mehrzahl von Kissen handelt.

Weiter vorteilhaft ist die Ausgestaltung, dass das Spannelement durch Fluidbeaufschlagung, insbesondere durch die Fluidversorgung des Fahrzeugs, expandierbar ist. Eine solche Ausgestaltung bietet auf besonders einfache Art und Weise eine flächige Verspannung der Abdeckplane, da für die Expandierung des Spannelements einfach die Fluidversorgung des Fahrzeugs, insbesondere die Druckluftversorgung, genutzt werden kann. Eine derartige Ausgestaltung bietet zudem den Vorteil, dass der Druck im Spannelement überall gleich groß ist und sich somit eine gleichmäßige Spannung auf die Abdeckplane erzeugen lässt.

Eine weitere vorteilhafte Ausführungsform der Erfindung sieht vor, dass das Spannelement einen Spannträger mit einem ovalen Querschnitt aufweist, welcher drehbar um die Querschnittsachse und / oder arretierbar ausgebildet ist. Mit einem solchen Spannträger kann auf besonders einfache Art und Weise der Verbindungspunkt in seiner Lage gegenüber dem Fixierelement verändert werden, sodass eine Verspannung der ankoppelbaren Abdeckplane erfolgt.

Ferner ist Gegenstand der Erfindung ein Ladungssicherungssystem. Das erfindungsgemäße Ladungssicherungssystem weist eine Abdeckplane und eine Spanneinrichtung mit der oben und im Folgenden beschriebenen Ausgestaltungen auf, wobei die Abdeckplane wenigstens ein Kopplungsverbindungselement aufweist, welches dazu ausgebildet ist, mit dem Kopplungselement der Spanneinrichtung verkoppelt zu werden.

Eine vorteilhafte Ausgestaltung des Ladungssicherungssystems sieht vor, dass das Kopplungsverbindungselement als sich zumindest annährend parallel zur seitlichen Begrenzung erstreckende Schiene ausgebildet ist, welche ein Profil zur Aufnahme des Kopplungselements aufweist. Ein solches Kopplungsverbindungselement verringert den Aufwand bei der Kopplung der Abdeckplane mit der Spanneinrichtung.

Ferner ist Gegenstand der Erfindung eine Koppelungsanordnung mit wenigstens einem Kopplungselement und wenigstens einem Kopplungsverbindungselement, wobei das Kopplungsverbindungselement wenigstens eine hakenförmige Struktur aufweist und das Kopplungselement wenigstens eine nutförmige Aufnahme zur Kopplung mit wenigstens einer hakenförmigen Struktur aufweist. Eine derartige Kopplungsanordnung ermöglicht eine besonders einfache aber sichere Kopplung eines Kopplungsverbindungselements mit einem Kopplungselement.

Eine vorteilhafte Ausgestaltung der Koppelungsanordnung sieht vor, dass das Kopplungselement wenigstens eine Grifflasche und das Kopplungsverbindungselement wenigstens eine Anschlagsfläche aufweist, wobei die Grifflasche bei Kopplung des Kopplungselements mit dem Kopplungsverbindungselement an der Anschlagsfläche anliegt. Das Anliegen der Grifflasche an der Anschlagsfläche verhindert auf sehr einfache, aber sichere Art und Weise eine Verkippung des Kopplungselementes gegenüber dem Kopplungverbindungselement. Eine solche Verkippung kann insbesondere auftreten, wenn auf die verkoppelten Elemente eine Kraft, insbesondere eine Zugbelastung durch die Abdeckplane und das Verbindungselement, ausgeübt wird.

Eine weitere vorteilhafte Ausführungsform der Koppelungsanordnung ist, dass das Kopplungsverbindungselement ein Anschlagselement aufweist, welches dazu ausgebildet ist, eine Abstützung des Kopplungsverbindungselements an einer Fahrzeugbegrenzungsfläche zu gewährleisten. Mit einem solchen Anschlagselement kann eine Verkippung des Kopplungsverbindungselementes einfach aber sicher verhindert werden. Eine solche Verkippung kann insbesondere auftreten, wenn auf das Kopplungsverbindungselement eine Kraft, insbesondere eine Zugbelastung durch die Abdeckplane, ausgeübt wird.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen schematisch dargestellt und werden nachfolgend näher beschrieben. Es zeigen:
- Figur 1:: schematische Schnittansicht auf eine erfindungsgemäße Spanneinrichtung;
- Figur 2:: schematische Schnittansicht auf ein erfindungsgemäßes Kopplungselement;
- Figur 3:: schematische Schnittansicht auf eine erfindungsgemäße Spanneinrichtung;
- Figur 4:: schematische Schnittansicht auf eine erfindungsgemäße Spanneinrichtung im verspannten Zustand;
- Figur 5:: Heckansicht auf einen Lastkraftwagen oder Anhänger mit einem erfindungsgemäßen Ladungssicherungssystem;
- Figur 6:: Heckansicht auf einen Lastkraftwagen oder Anhänger mit einem erfindungsgemäßen Ladungssicherungssystem im verspannten Zustand.
- Figur 7:: schematische Schnittansicht auf eine erfindungsgemäße Spanneinrichtung im verspannten Zustand;
- Figur 8:: schematische Ansicht auf ein erfindungsgemäßes Kopplungsverbindungselement;

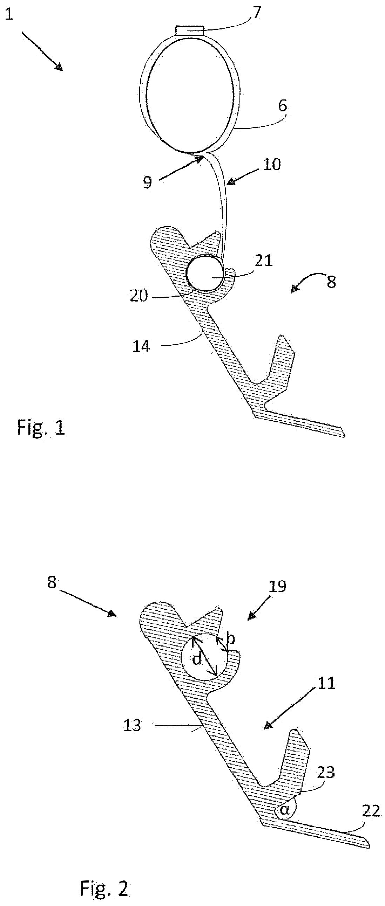

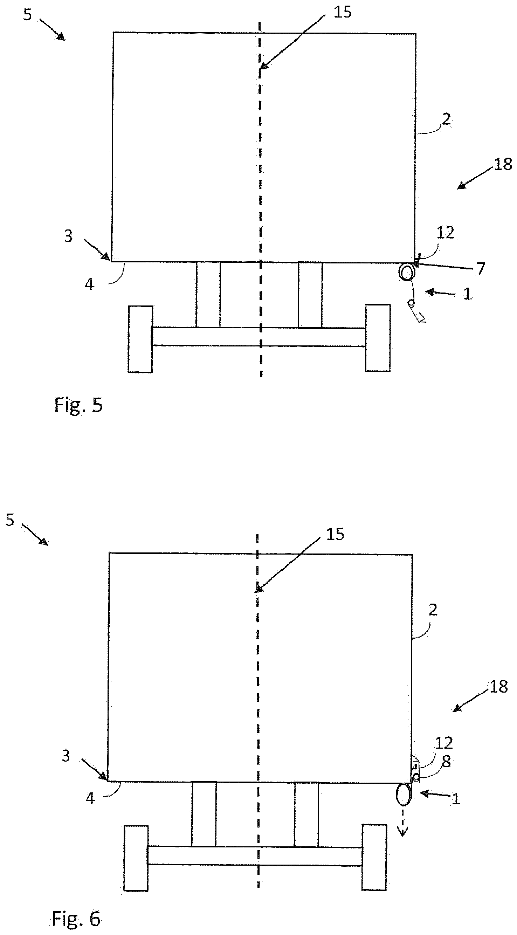

In den Figuren allgemein mit dem Bezugszeichen 1 bezeichnet ist eine erfindungsgemäße Spanneinrichtung dargestellt. Die Darstellung gemäß Figur 1 zeigt eine Spanneinrichtung 1 zum Verspannen einer Abdeckplane 2 (Figuren 5 und 6) an einer seitlichen Begrenzung 3 (Figuren 5 und 6) einer Ladefläche 4 (Figuren 5 und 6) eines Fahrzeugs 5 (Figuren 5 und 6) mit einem Spannelement 6 zum Erzeugen einer Spannung in der Abdeckplane 2 (Figuren 5 und 6), wobei das Spannelement 6 dazu ausgebildet ist, auf die Abdeckplane 2 (Figuren 5 und 6) eine Zugkraft auszuüben, so dass die Abdeckplane 2 (Figuren 5 und 6) flächig verspannt wird. Die Spanneinrichtung 1 ist mit einem Fixierelement 7 im Bereich der seitlichen Begrenzung 3 (Figuren 5 und 6) der 4 Ladefläche (Figuren 5 und 6) unverlierbar fixiert. Außerdem weist die Spanneinrichtung 1 ein freies Kopplungselement 8 auf, welches zur Verbindung mit der Abdeckplane 2 (Figur 5 und 6) ausgebildet ist. Das Kopplungselement 8 ist an dem Verbindungspunkt 9 über ein Verbindungselement 10 mit dem Spannelement 6 verbunden. Der Verbindungspunkt 9 ist an dem Spannelement 6 gegenüber von dem Fixierelement 7 angeordnet. Mittels des Spannelements 6 kann die Lage des Verbindungspunktes 9 gegenüber dem Fixierelement 7 verändert werden. Die Veränderung der Lage des Verbindungspunktes 9 sorgt für eine flächige Verspannung der ankoppelbaren Abdeckplane 2 (Figur 5 und 6). In dem hier dargestellten Ausführungsbeispiel erfolgt die Verspannung mittels eines reversibel expandierbaren Spannelements 6. Um eine Zugkraft auf die Abdeckplane 2 (Figuren 5 und 6) zu erzeugen und diese flächig zu verspannen, wird in dem dargestellten Ausführungsbeispiel das Spannelement 6 mit Fluid, vorzugsweise Druckluft, beaufschlagt. Hierdurch wird das Spannelement 6 expandiert und der Verbindungspunkt 9 wird gegenüber dem Fixierelement 7 in seiner Lage verändert. Durch die Verbindung des Verbindungselementes 10 an dem Verbindungspunkt 9 zieht das Verbindungselement 10 an dem Kopplungselement 8 und verspannt eine mit dem Kopplungselement 8 gekoppelte Abdeckplane 2 (Figur 6).

Figur 2 zeigt das Kopplungselement 8 aus Figur 1 detaillierter dargestellt. Es handelt sich bei dieser Darstellung um eine Schnittdarstellung durch eine sich in Blickrichtung erstreckende Schiene. Diese Schiene weist nutförmige Aufnahmen 11 zur Aufnahme von einem Kopplungsverbindungselement 12 (Figur 5 und 6) der Abdeckplane 2 (Figur 5 und 6) auf. Die nutförmige Aufnahme 11 ist grundsätzlich auf keine bestimmte Form festgelegt. Wesentlich ist nur, dass die Aufnahme 11 so ausgebildet ist, dass sich die Aufnahme 11 zur sicheren Kopplung mit dem Kopplungsverbindungselement 12 (Figuren 5 und 6) eignet. Auf der planen Außenseite 14 (Figur 1) ist ein Reflektor 13 angebracht. Das Kopplungselement 8 kann formschlüssig mit dem flexiblen Verbindungselement 10 verbunden sein. Hierzu weist das Kopplungselement 8 eine Nut 19 auf, welche sich vorzugsweise entlang der gesamten Schiene erstreckt. Als formschlüssiger Verbindungspartner der Nut 19 weist das flexible Verbindungselement 10 eine Verdickung 20 (Figur 1) auf. Die Verdickung 20 kann erfindungsgemäß dadurch erhalten werden, dass ein erster Endabschnitt des Verbindungselementes 10 (Figur 1) als Schlaufe ausgebildet ist. In der Schlaufe kann ein rohrförmiges Element 21 angeordnet sein. Um einen besonders guten Formschluss zu erhalten, entspricht eine solch ausgebildete Verdickung 20 im Wesentlichen den Ausmaßen d, b der Nut 19. Außerdem weist das Kopplungselement 8 eine im Winkel α abstehende Grifflasche 22 auf, mit welcher sich das Kopplungselement 8 leicht ergreifen lässt. Hierzu ist außerdem eine Abschrägung 23 vorgesehen, welche die Greifbarkeit zusätzlich erhöht. Das Kopplungselement 8 besteht vorzugsweise aus einem strapazierfähigen, witterungsbeständigen und formbeständigen Material, bevorzugt aus Aluminium.

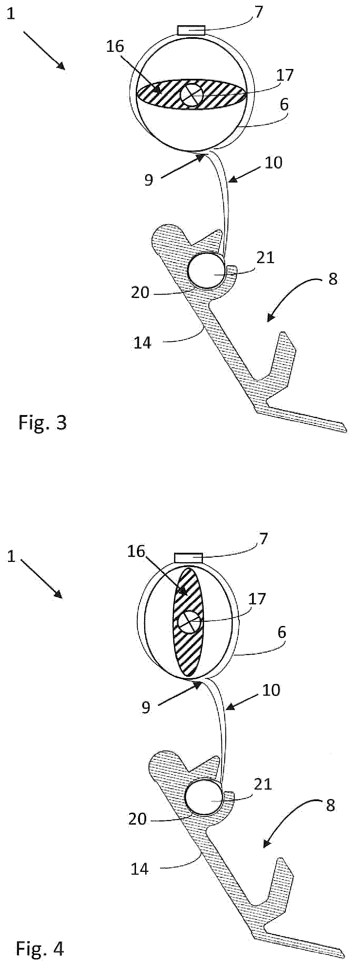

Die Figur 3 zeigt eine besonders vorteilhafte Ausführungsform der Spanneinrichtung 1. Die Darstellung gemäß Figur 3 zeigt eine Spanneinrichtung 1 zum Verspannen einer Abdeckplane 2 (Figuren 5 und 6) an einer seitlichen Begrenzung 3 (Figuren 5 und 6) einer Ladefläche 4 (Figuren 5 und 6) eines Fahrzeugs 5 (Figuren 5 und 6) mit einem Spannelement 6 zum Erzeugen einer Spannung in der Abdeckplane 2 (Figuren 5 und 6), wobei das Spannelement 6 dazu ausgebildet ist, auf die Abdeckplane 2 (Figuren 5 und 6) eine Zugkraft auszuüben, so dass die Abdeckplane 2 (Figuren 5 und 6) flächig verspannt wird. Die Spanneinrichtung 1 ist mit einem Fixierelement 7 im Bereich der zeitlichen Begrenzung 3 (Figur 5 und 6) der 4 Ladefläche (Figur 5 und 6) unverlierbar fixiert war. Außerdem weist die Spanneinrichtung 1 ein freies Kopplungselement 8 (siehe auch Figur 2) auf, welches zur Verbindung mit der Abdeckplane 2 (Figur 5 und 6) ausgebildet ist. Das Kopplungselement 8 ist an dem Verbindungspunkt 9 über ein Verbindungselement 10 mit dem Spannelement 6 verbunden. Der Verbindungspunkt 9 ist an dem Spannelement 6 gegenüber von dem Fixierelement 7 angeordnet. Mittels des Spannelements 6 kann die Lage des Verbindungspunktes 9 gegenüber dem Fixierelement 7 verändert werden. Die Veränderung der Lage des Verbindungspunktes 9 sorgt für eine flächige Verspannung der ankoppelbaren Abdeckplane 2 (Figur 5 und 6). Bei der hier dargestellten Ausführungsform weist das Spannelement 6 einen Spannträger 16 mit einem ovalen Querschnitt auf. Dieser Spannträger 16 ist drehbar um eine Querschnittsachse 17 in Blickrichtung ausgebildet. Durch Verdrehung des Spannträgers 16 kann die Lage des Verbindungspunktes 9 gegenüber dem Fixierelement 7 verändert werden um eine Verspannung der ankoppelbaren Abdeckplane 2 (Figur 5 und 6) herzustellen. Eine Arretierungsmöglichkeit (nicht dargestellt) des Spannträgers 16 stellt sicher, dass die Abdeckplane 2 (Figuren 5 und 6) sicher durch das Spannelement 6 verspannt ist und bleibt.

In Figur 4 ist eine Spanneinrichtung 1 gemäß Figur 3 im verspannten Zustand zu sehen. Der Spannträger ist hier arretiert und die Lage des Verbindungspunktes 9 gegenüber dem Fixierelement 7 ist derart verändert, dass eine an das Kopplungselement 8 gekoppelte Abdeckplane (Figur 6) verspannt sein würde.

Die Figur 5 zeigt eine schematische Heckansicht auf einen Lastkraftwagen 5 oder Anhänger 5 mit einem erfindungsgemäßen Ladungssicherungssystem 18. Das Ladungssicherungssystem 18 umfasst eine Abdeckplane 2 und eine Spanneinrichtung 1, wie sie bereits oben und im Folgenden beschrieben ist. Die Abdeckplane 2 weist ein Kopplungsverbindungselement 12 auf, welches dazu ausgebildet ist, mit dem Kopplungselement 8 der Spanneinrichtung 1 verkoppelt zu werden. Das Kopplungsverbindungselement 12 ist bevorzugt als Winkelprofil ausgebildet und weist dabei einen flächigen Grundkörper und einen Vorsprung auf. Der Vorsprung dient dazu mit der nutförmigen Aufnahme 11 (Figur 2) des Kopplungselementes 8 in Eingriff zu kommen und ist vorteilhafter Weise als abgewinkeltes Profil ausgebildet. Der flächige Grundkörper ist mit der Abdeckplane 2 verbunden. Die erfindungsgemäße Spanneinrichtung 1 ist in einem montierten Zustand bevorzugt an einer seitlichen Begrenzung 3 einer Ladefläche 4 eines Fahrzeugs 5 mit dem Fixierelement 7 fixiert. Idealerweise ist die Spanneinrichtung 1 unterhalb der Ladefläche 4 angeordnet. Steht die Spanneinrichtung 1 nicht mit der Abdeckplane 2 in Verbindung, wie in Figur 6 dargestellt, dann weist eine derartige Anordnung den Vorteil auf, dass die Spanneinrichtung 1 beim Be- und Entladen des Fahrzeugs nicht stört. Die Spanneinrichtung 1 befindet sich in diesem Fall aufgrund der Schwerkraft und ihrer Anordnung innerhalb und unterhalb des Fahrzeugrahmens bzw. der Ladefläche 4.

Figur 6 zeigt eine Heckansicht auf einen stark vereinfachten Lastkraftwagen 5 oder Anhänger 5 gemäß Figur 5 mit einem erfindungsgemäßen Ladungssicherungssystem 18 in einem verspannten Zustand. Ist das Spannelement 6 (Figur 1 und 4) gespannt, dann wird eine Spannung in vertikaler Richtung (siehe gestrichelten Pfeil in Figur 6), d.h. nach unten ziehend, aufgebaut und verspannt die gekoppelte Abdeckplane 2 flächig.

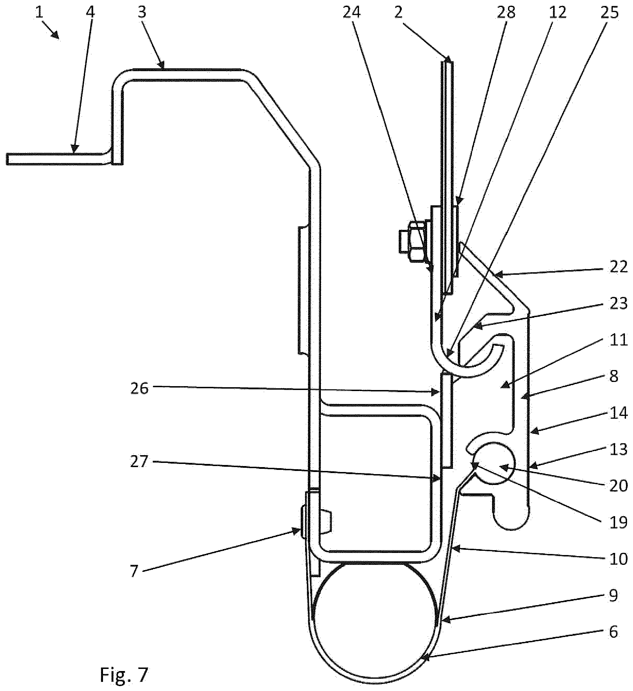

Die Figur 7 zeigt eine erfindungsgemäße Spanneinrichtung 1 zum Verspannen einer Abdeckplane 2 an einer seitlichen Begrenzung 3 einer Ladefläche 4 eines Fahrzeugs 5 (Figur 5 und 6) mit einem Spannelement 6 zum Erzeugen einer Spannung in der Abdeckplane 2, wobei das Spannelement 6 dazu ausgebildet ist, auf die Abdeckplane 2 eine Zugkraft auszuüben, so dass die Abdeckplane 2 flächig verspannt wird. Die Spanneinrichtung 1 ist mit einem Fixierelement 7 im Bereich der seitlichen Begrenzung 3 der Ladefläche 4 unverlierbar fixiert. Außerdem weist die Spanneinrichtung 1 ein freies Kopplungselement 8 auf, welches zur Verbindung mit einem Kopplungsverbindungselement 12 der Abdeckplane 2 ausgebildet ist. Mittels des Spannelements 6 kann die Lage des Verbindungspunktes 9 gegenüber dem Fixierelement 7 verändert werden. Die Veränderung der Lage des Verbindungspunktes 9 sorgt für eine flächige Verspannung der ankoppelbaren Abdeckplane 2. Durch die Verbindung des Verbindungselementes 10 an dem Verbindungspunkt 9 zieht das Verbindungselement 10 an dem Kopplungselement 8, welches mit dem Kopplungsverbindungselement 12 der Abdeckplane 2 verbunden ist, wodurch die so gekoppelte Abdeckplane 2 verspannt wird.

Die in Figur 7 verkoppelt dargestellte Kopplungsanordnung weist ein Kopplungselement 8 und ein Kopplungsverbindungselement 12 auf. Das Kopplungsverbindungselement 12 hat eine hakenförmige Struktur 25 die mit der nutförmigen Aufnahme 11 des Kopplungselement 12 durch die Verkopplung der beiden Element 8, 12 in Eingriff kommt. Eine über das Verbindungselement 10 erzeugte Verspannung der ankoppelbaren Abdeckplane 2 kann bei Verkopplung des Kopplungselement 8 mit dem Kopplungsverbindungselement 12 zu einer Verkippung der Elemente 8, 12 führen. Um dies zu verhindern weist das Kopplungselement 8 eine Grifflasche 22 auf, die bei Kopplung des Kopplungselementes 8 mit dem Kopplungsverbindungselement 12 an einer Anschlagsfläche 28 des Kopplungsverbindungselements 12 anliegt. Dieses Anliegen der Grifflasche 22 an der Anschlagsfläche 28 ermöglicht eine sichere Übertragung der durch das Verbindungselement 10 eingebrachten, im Wesentlichen vertikal wirkenden, Zugkräfte über das Kopplungselement 8 und das Kopplungsverbindungselement 12 auf die Abdeckplane 2. Zudem ist ein Anschlagselement 26 an dem Kopplungsverbindungselement 12 gezeigt, welches an der Fahrzeugbegrenzungsfläche 27 abgestützt ist, um eine Verkippung des Kopplungsverbindungselements 12 zu verhindern. Die im Wesentlichen horizontal wirkenden Zugkräfte würden, ohne eine solche Abstützung an der fahrzeugfesten Fahrzeugbegrenzungsfläche 27, durch den Hebelarm aus Kopplungselement 8 und Kopplungsverbindungselement 12 zu einer Verkippung dieser Elemente 8, 12 führen, was durch das Anschlagselement 26 sicher verhindert wird, indem das Anschlagselement 26 das Kopplungsverbindungselements 12 optimal positioniert und abstützt.

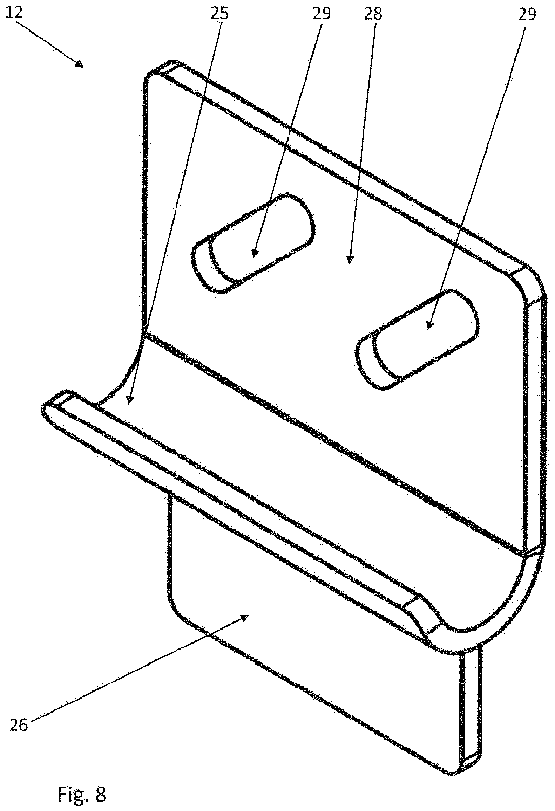

Figur 8 zeigt ein erfindungsgemäßes Kopplungsverbindungselement 12 in einer Detailansicht. Das Kopplungsverbindungselement 12 bildet eine sich länglich erstreckende Schiene und weist eine hakenförmige Struktur 25 auf, die bei Verkopplung mit dem Kopplungselement 8 (Figur 7) aufgebrachte Kräfte überträgt. Über die Befestigungsösen 29 in der Rückenfläche 24 (Figur 7) des Kopplungsverbindungselements 12 kann dieses mit der Abdeckplane 2 (Figur 7) fest verbunden werden. Gut zu erkennen ist auch das Anschlagselement 26, welches eine Verlängerung der Rückenfläche 24 (Figur 7) des Kopplungsverbindungselements 12 darstellt.

### Bezuaszeichenliste

- 1: Spanneinrichtung
- 2: Abdeckplane
- 3: seitlichen Begrenzung
- 4: Ladefläche
- 5: Fahrzeugs
- 6: Spannelement
- 7: Fixierelement
- 8: freies Kopplungselement
- 9: Verbindungspunkt
- 10: Verbindungselement
- 11: Aufnahmenuten
- 12: Kopplungsverbindungselement
- 13: Reflektor
- 14: plane Außenseite
- 15: Fahrzeugmitte
- 16: Spannträger
- 17: Querschnittsachse
- 18: Ladungssicherungssystem
- 19: Nut
- 20: Verdickung
- 21: rohrförmiges Element
- 22: Grifflasche
- 23: Abschrägung
- 24: Rückenfläche
- 25: hakenförmige Struktur
- 26: Anschlagselement
- 27: Fahrzeugbegrenzungsfläche
- 28: Anschlagsfläche
- 29: Befestigungsösen

## Patentansprüche

1. Spanneinrichtung (1) zum Verspannen einer Abdeckplane (2) an einer seitlichen Begrenzung (3) einer Ladefläche (4) eines Fahrzeugs (5), mit wenigstens einem Spannelement (6) zum Erzeugen einer Spannung in der Abdeckplane (2), wobei das Spannelement (6) dazu ausgebildet ist, auf die Abdeckplane (2) eine Zugkraft derart auszuüben, dass die Abdeckplane (2) flächig verspannt wird, wobei die Spanneinrichtung (1) mit wenigstens einem Fixierelement (7) im Bereich der seitlichen Begrenzung (3) der Ladefläche (4) unverlierbar fixierbar ist und wenigstens ein freies Kopplungselement (8) zur Verbindung mit der Abdeckplane (2) ausgebildet ist, wobei das Kopplungselement (8) an wenigstens einem Verbindungspunkt (9) über ein Verbindungselement (10) mit dem Spannelement (6) verbunden ist, wobei der Verbindungspunkt (9) durch das Spannelement (6) in seiner Lage gegenüber dem Fixierelement (7) veränderlich ist, so dass durch Veränderung der Lage des Verbindungspunkts (9) eine Verspannung der ankoppelbaren Abdeckplane (2) erfolgt,
**dadurch gekennzeichnet, dass** das Verbindungelement (10) das Spannelement (6) zumindest teilweise manschettenförmig umgibt, wobei das Spannelement (6) reversibel expandierbar ausgebildet ist.

2. Spanneinrichtung nach Anspruch 12, **dadurch gekennzeichnet, dass** das Verbindungselement (10) flexibel ausgebildet und an die Kontur des Spannelements anpassbar ist.

3. Spanneinrichtung nach Anspruch 1 oder 2, **dadurch gekennzeichnet, dass** das Verbindungselement (10) als sich zumindest annährend parallel zur seitlichen Begrenzung (3) erstreckender Abschnitt, vorzugsweise aus Planen- oder Textilmaterial, ausgebildet ist.

4. Spanneinrichtung nach einem der Ansprüche 1 bis 3, **dadurch gekennzeichnet, dass** das Kopplungselement (8) als sich zumindest annährend parallel zur seitlichen Begrenzung (3) erstreckende Schiene ausgebildet ist, mit nutförmigen Aufnahmen (11) zur Aufnahme von wenigstens einem Kopplungsverbindungselement (12) der Abdeckplane (2).

5. Spanneinrichtung nach einem der Ansprüche 1 bis 4, **dadurch gekennzeichnet, dass** an dem Kopplungselement (8) wenigstens ein Reflektor (13) angebracht ist.

6. Spanneinrichtung nach einem der Ansprüche 1 bis 5, **dadurch gekennzeichnet, dass** das Kopplungselement (8) eine im Wesentlichen plane Außenseite (14) aufweist, die im gekoppelten Zustand nach außen, weg von der Fahrzeugmitte (15) zeigt.

7. Spanneinrichtung nach Anspruch 5 und 6, **dadurch gekennzeichnet, dass** der Reflektor (13) an der planen Außenseite (14) angebracht ist.

8. Spanneinrichtung nach einem der Ansprüche 1 bis 7, **dadurch gekennzeichnet, dass** das Spannelement (6) durch Fluidbeaufschlagung, insbesondere durch die Fluidversorgung des Fahrzeugs (5), expandierbar ist.

9. Spanneinrichtung nach einem der Ansprüche 1 bis 7, **dadurch gekennzeichnet, dass** das Spannelement (6) einen Spannträger (16) mit einem ovalen Querschnitt aufweist, welcher drehbar um die Querschnittsachse (17) und / oder arretierbar ausgebildet ist.

10. Ladungssicherungssystem (18) für ein Fahrzeug (5), mit einer Abdeckplane (2) und mit einer Spanneinrichtung (1) nach einem der Ansprüche 1 bis 9, wobei die Abdeckplane (2) wenigstens ein Kopplungsverbindungselement (12) aufweist, welches dazu ausgebildet ist, mit dem Kopplungselement (8) der Spanneinrichtung (1) verkoppelt zu werden.

11. Ladungssicherungssystem nach Anspruch 10, **dadurch gekennzeichnet, dass** das Kopplungsverbindungselement (12) als sich zumindest annährend parallel zur seitlichen Begrenzung (3) erstreckende Schiene ausgebildet ist, welche ein Profil zur Aufnahme des Kopplungselements (8) aufweist.

12. Koppelungsanordnung für ein Fahrzeug (5), mit einer Spanneinrichtung nach einem der Ansprüche 1 bis 9 oder mit einem Ladungssicherungssystem (18) nach einem der Ansprüche 10 bis 11, mit wenigstens einem Kopplungselement (8) und wenigstens einem Kopplungsverbindungselement (12), wobei das Kopplungsverbindungselement (12) wenigstens eine hakenförmige Struktur (25) aufweist und das Kopplungselement (8) wenigstens eine nutförmige Aufnahme (11) zur Kopplung mit wenigstens einer hakenförmigen Struktur (25) aufweist.

13. Koppelungsanordnung nach Anspruch 12, **dadurch gekennzeichnet, dass** das Kopplungselement (8) wenigstens eine Grifflasche (22) und das Kopplungsverbindungselement (12) wenigstens eine Anschlagsfläche (28) aufweist, wobei die Grifflasche (22) bei Kopplung des Kopplungselements (8) mit dem Kopplungsverbindungselement (12) an der Anschlagsfläche (28) anliegt.

14. Koppelungsanordnung nach Anspruch 12 oder 13, **dadurch gekennzeichnet, dass** das Kopplungsverbindungselement (12) ein Anschlagselement (26) aufweist, welches dazu ausgebildet ist, eine Abstützung des Kopplungsverbindungselements (12) an einer Fahrzeugbegrenzungsfläche (27) zu gewährleisten.

## Claims

1. Tensioning device (1) for tensioning a tarpaulin (2) at a lateral limitation (3) of a load bed (4) of a vehicle (5), comprising at least one tensioning element (6) for generating a tension in the tarpaulin (2), wherein the tensioning element (6) is configured to exert a tensile force on the tarpaulin (2) such that the tarpaulin (2) is tensioned in an extensive manner, wherein the tensioning device (1) can be undetachably fixed, by means of at least one fixing element (7), in the region of the lateral limitation (3) of the load bed (4), and at least one free coupling element (8) for connection to the tarpaulin (2) is formed, wherein the coupling element (8) is connected to the tensioning element (6) by means of a connection element (10), at at least one connection point (9), wherein the position of the connection point (9) relative to the fixing element (7) is variable by means of the tensioning element (6), such that tensioning of the couplable tarpaulin (2) is achieved by changing the position of the connection point (9),
**characterised in that**
the connection element (10) at least partially surrounds the tensioning element (6) in a sleeve-like manner, wherein the tensioning element (6) is configured so as to be reversibly expandable.

2. Tensioning device according to claim 1, **characterised in that** the connection element (10) is configured so as to be flexible, and can be adapted to the contour of the tensioning element.

3. Tensioning device according to either claim 1 or claim 2, **characterised in that** the connection element (10) is configured as a portion, preferably made of tarpaulin or textile material, which extends at least approximately in parallel with the lateral limitation (3).

4. Tensioning device according to any of claims 1 to 3, **characterised in that** the coupling element (8) is configured as a rail that extends at least approximately in parallel with the lateral limitation (3), comprising groove-like receptacles (11) for receiving at least one coupling connection element (12) of the tarpaulin (2).

5. Tensioning device according to any of claims 1 to 4, **characterised in that** at least one reflector (13) is attached to the coupling element (8).

6. Tensioning device according to any of claims 1 to 5, **characterised in that** the coupling element (8) comprises a substantially planar outer side (14) which faces away from the centre of the vehicle (15) in the coupled state.

7. Tensioning device according to claims 5 and 6, **characterised in that** the reflector (13) is attached to the planar outer side (14).

8. Tensioning device according to any of claims 1 to 7, **characterised in that** the tensioning element (6) can be expanded by application of fluid, in particular by the fluid supply of the vehicle (5).

9. Tensioning device according to any of claims 1 to 7, **characterised in that** the tensioning element (6) comprises a tensioning carrier (16) having an oval cross section, which carrier is configured so as to be rotatable about the cross-sectional axis (17) and/or such that it can be locked.

10. Load securing system (18) for a vehicle (15), comprising a tarpaulin (2) and comprising a tensioning device (1) according to any of claims 1 to 9, wherein the tarpaulin (2) comprises at least one coupling connection element (12) which is configured to be coupled to the coupling element (8) of the tensioning device (1).

11. Load securing system according to claim 10, **characterised in that** the coupling connection element (12) is configured as a rail that extends at least approximately in parallel with the lateral limitation (3), which rail comprises a profile for receiving the coupling element (8).

12. Coupling arrangement for a vehicle (5), comprising a tensioning device according to any of claims 1 to 9 or comprising a load securing system (18) according to either of claims 10 to 11, comprising at least one coupling element (8) and at least one coupling connection element (12), wherein the coupling connection element (12) has at least one hooked structure (25) and the coupling element (8) comprises at least one groove-like receptacle (11) for coupling to at lest one hooked structure (25).

13. Coupling arrangement according to claim 12, **characterised in that** the coupling element (8) comprises at least one grip tab (22) and the coupling connection element (12) comprises at least one stop face (28), wherein the grip tab (22) rests on the stop face (28) during coupling of the coupling element (8) to the coupling connection element (12).

14. Coupling arrangement according to either claim 12 or claim 13, **characterised in that** the coupling connection element (12) comprises a stop element (26) which is configured to ensure support of the coupling connection element (12) on a vehicle limiting surface (27).

## Revendications

1. Dispositif de tension (1) pour tendre une bâche de recouvrement (2) sur une limite latérale (3) d'une surface de chargement (4) d'un véhicule (5), avec au moins un élément de tension (6) pour générer une tension dans la bâche de recouvrement (2), dans lequel l'élément de tension (6) est réalisé pour exercer sur la bâche de recouvrement (2) une force de traction de telle manière que la bâche de recouvrement (2) est tendue à plat, dans lequel le dispositif de tension (1) peut être fixé de manière imperdable par au moins un élément de fixation (7) dans la zone de la limite latérale (3) de la surface de chargement (4) et au moins un élément de couplage (8) libre est réalisé pour être relié à la bâche de recouvrement (2), dans lequel l'élément de couplage (8) est relié à l'élément de tension (6) par l'intermédiaire d'un élément de liaison (10) sur au moins un point de liaison (9), dans lequel le point de liaison (9) est variable dans sa position par rapport à l'élément de fixation (7) par l'élément de tension (6) de sorte que du fait du changement de la position du point de liaison (9), une mise en tension de la bâche de recouvrement (2) pouvant être accouplée a lieu,
**caractérisé en ce**
**que** l'élément de liaison (10) entoure au moins en partie en forme de manchon l'élément de tension (6), dans lequel l'élément de tension (6) est réalisé de manière expansible de manière réversible.

2. Dispositif de tension selon la revendication 1, **caractérisé en ce que** l'élément de liaison (10) est réalisé de manière flexible et peut être adapté au contour de l'élément de tension.

3. Dispositif de tension selon la revendication 1 ou 2, **caractérisé en ce que** l'élément de liaison (10) est réalisé en tant que section s'étendant au moins approximativement de manière parallèle par rapport à la limite latérale (3), de préférence en matériau de bâche ou textile.

4. Dispositif de tension selon l'une quelconque des revendications 1 à 3, **caractérisé en ce que** l'élément de couplage (8) est réalisé en tant que rail s'étendant au moins approximativement de manière parallèle par rapport à la limite latérale (3), avec des logements (11) en forme de rainure pour loger au moins un élément de liaison par couplage (12) de la bâche de recouvrement (2).

5. Dispositif de tension selon l'une quelconque des revendications 1 à 4, **caractérisé en ce qu'**au moins un réflecteur (13) est installé sur l'élément de couplage (8).

6. Dispositif de tension selon l'une quelconque des revendications 1 à 5, **caractérisé en ce que** l'élément de couplage (8) présente un côté extérieur (14) sensiblement plan, qui pointe, dans l'état couplé, vers l'extérieur de manière à s'éloigner du centre de véhicule (15).

7. Dispositif de tension selon la revendication 5 et 6, **caractérisé en ce que** le réflecteur (13) est installé sur le côté extérieur (14) plan.

8. Dispositif de tension selon l'une quelconque des revendications 1 à 7, **caractérisé en ce que** l'élément de tension (6) peut être expansé par une action exercée par un fluide, en particulier par l'alimentation en fluide du véhicule (5).

9. Dispositif de tension selon l'une quelconque des revendications 1 à 7, **caractérisé en ce que** l'élément de tension (6) présente un support de tension (16) avec une section transversale ovale, laquelle est réalisée de manière à pouvoir tourner autour de l'axe de section transversale (17) et/ou de manière à pouvoir être arrêtée.

10. Système de blocage de chargement (18) pour un véhicule (5), avec une bâche de recouvrement (2) et avec un dispositif de tension (1) selon l'une quelconque des revendications 1 à 9, dans lequel la bâche de recouvrement (2) présente au moins un élément de liaison par couplage (12), lequel est réalisé pour être assemblé par couplage à l'élément de couplage (8) du dispositif de tension (1).

11. Système de blocage de chargement selon la revendication 10, **caractérisé en ce que** l'élément de liaison par couplage (12) est réalisé en tant qu'un rail s'étendant au moins approximativement de manière parallèle par rapport à la limite latérale (3), lequel présente un profil pour loger l'élément de couplage (8).

12. Ensemble de couplage pour un véhicule (5), avec un dispositif de tension selon l'une quelconque des revendications 1 à 9 ou avec un système de blocage de chargement (18) selon l'une quelconque des revendications 10 à 11, avec au moins un élément de couplage (8) et au moins un élément de liaison par couplage (12), dans lequel l'élément de liaison par couplage (12) présente au moins une structure en forme de crochet (25) et l'élément de couplage (8) présente au moins un logement (11) en forme de rainure destiné à être couplé à au moins une structure en forme de crochet (25).

13. Ensemble de couplage selon la revendication 12, **caractérisé en ce que** l'élément de couplage (8) présente au moins une bride de préhension (22) et l'élément de liaison par couplage (12) présente au moins une surface de butée (28), dans lequel la bride de préhension (22) repose sur la surface de butée (28) lors du couplage de l'élément de couplage (8) à l'élément de liaison par couplage (12).

14. Ensemble de couplage selon la revendication 12 ou 13, **caractérisé en ce que** l'élément de liaison par couplage (12) présente un élément de butée (26), lequel est réalisé pour assurer un soutien de l'élément de liaison par couplage (12) sur une surface de limite de véhicule (27).
